# FASCICULE DE BREVET EUROPEEN

(11) **EP 1 283 119 B1**
(45) Date de publication et mention de la délivrance du brevet: **19.04.2006**
(21) Numéro de dépôt: 02291483.2
(22) Date de dépôt: 13.06.2002
(51) Int. Cl.: B60J 7/20

(54) **Véhicule automobile à toit ouvrant rigide avec un écran de séparation mobile**
Kraftfahrzeug mit einem öffnungsfähigen starren Dach und mit einem bewegbaren Scheidungschirm
Motor vehicle with open rigid roof and with a movable separating screen

(30) Priorité: 08.08.2001 FR 0110599
(43) Date de publication de la demande: 12.02.2003
(73) Titulaire: Peugeot Citroen Automobiles SA, 92200 Neuilly sur Seine (FR)
(72) Inventeur: George, Aubert, 78750 Mareil-Marly (FR)
(74) Mandataire: Thinat, Michel

(56) Documents cités:
- EP-A- 1 092 580
- DE-A- 19 834 850
- DE-C- 19 542 906

## Description

La présente invention concerne les véhicules automobiles décapotables à toit ouvrant rigide.

Plus précisément, elle concerne un véhicule automobile décapotable à toit ouvrant rigide, pouvant occuper une position déployée ou une position repliée en partie supérieure du coffre arrière du véhicule, lequel coffre peut être fermé par un volet qui est monté pivotant relativement au coffre par un mécanisme d'articulation à biellettes latérales, un écran étant prévu pour occuper une position de séparation entre le toit ouvrant replié et le volume restant du coffre arrière, et étant fixé à une cloison avant séparant le coffre des sièges du véhicule.

Des véhicules de ce type sont connus de l'art antérieur. Ils présentent typiquement des écrans de séparation constitués par un rideau de matière souple et/ou un assemblage de panneaux rigides.

Quand le toit est déployé, le rideau est généralement enroulé contre la cloison avant du coffre et les panneaux rigides sont repliés au fond du coffre de façon à augmenter l'espace disponible pour les bagages.

La mise en place de l'écran en position de séparation, et inversement son repli, sont des opérations manuelles, en général mal aisées car l'utilisateur doit se pencher loin en avant, risquant ainsi de se salir.

Par ailleurs, certains éléments mécaniques fragiles du véhicule sont vulnérables aux chocs des bagages quand le toit est déployé.

Des objets se trouvant dans le coffre peuvent également se glisser entre différentes parties du toit repliées sur les côtés du coffre, endommageant ou bloquant les articulations qui les relient.

Enfin, le fond du coffre étant en communication avec la zone arrière des dossiers des passagers du véhicule quand l'écran de séparation est rangé au fond du coffre, des objets disposés dans le coffre peuvent, suite aux mouvements du véhicule, venir endommager certains éléments de sécurité qui s'y trouvent, comme par exemple des arceaux de sécurité.

Dans ce contexte, le but de la présente invention est d'augmenter le confort de l'utilisateur et de mieux isoler les bagages ou les objets transportés, empêchant qu'ils puissent endommager des équipements mécaniques fragiles situés dans leur environnement.

A cette fin, l'invention, par ailleurs conforme à la définition générique qu'en donne le préambule ci-dessus, est essentiellement caractérisée en ce que l'écran peut occuper une position d'accrochage aux biellettes latérales du mécanisme d'articulation du volet lorsque le toit ouvrant est déployé.

Dans un mode de réalisation préféré de l'invention, l'écran comprend des barres latérales qui lui sont solidaires et dont au moins une partie s'étend transversalement à l'axe longitudinal du véhicule, les barres pouvant être manuellement disposées respectivement sur deux moyens de support latéraux correspondant à la position de séparation de l'écran, ou manuellement accrochées respectivement aux biellettes latérales du mécanisme d'articulation du volet.

Avantageusement, une joue est disposée de chaque côté de l'écran, sensiblement perpendiculairement, ces joues étant solidaires de l'écran, chaque joue assurant la protection en position d'accrochage de l'écran aux biellettes latérales, d'éléments relativement fragiles situés en partie supérieure des parois latérales du coffre, et , en position de séparation de l'écran, de protection des parties latérales du toit replié comportant des articulations, pour empêcher des objets situés dans le coffre arrière d'atteindre notamment ces articulations.

Chaque barre latérale peut par exemple présenter une extrémité fixée de façon amovible à l'une correspondante des biellettes latérales par une pièce d'accrochage solidaire de la biellette, l'extrémité libre de la barre venant s'engager dans une ouverture de forme correspondante de la pièce d'accrochage.

De préférence, chaque moyen de support d'une barre latérale en position de séparation de l'écran comprend un tube vertical logé dans un garnissage du coffre, et dans l'extrémité supérieure duquel peut s'engager un tenon cylindrique solidaire de la barre latérale correspondante et d'axe perpendiculairement à celle-ci.

Chaque garnissage latéral comprend avantageusement une échancrure latérale sensiblement verticale de guidage de l'extrémité libre de la barre latérale correspondante vers sa position de support sur le tube.

Par exemple, l'écran comprend un panneau avant souple fixé à la cloison avant, et un panneau arrière rigide articulé au panneau avant, le panneau arrière pouvant être manuellement accroché aux biellettes latérales du mécanisme d'articulation du volet.

De préférence, chaque joue latérale est solidaire du côté correspondant du panneau arrière.

Avantageusement, on prévoit au moins un capteur de détection de position d'une barre latérale sur son moyen de support correspondant et pouvant fournir un signal empêchant le rangement du toit dans le coffre tant que les barres latérales sont accrochées aux biellettes latérales du mécanisme d'articulation du volet.

D'autres caractéristiques et avantages de l'invention ressortiront clairement de la description qui en est faite ci-après, à titre indicatif et nullement limitatif, en référence aux dessins annexés dans lesquels :
- la figure 1 est une vue latérale de l'intérieur du coffre arrière d'un véhicule automobile à volet ouvert, et dans lequel se trouve un écran de séparation en position de séparation, conforme à l'invention ;
- la figure 2 est une vue latérale du coffre semblable à celle de la figure 1 où le volet est ouvert, et l'écran de séparation est en position d'accrochage ;
- la figure 3 est une vue partielle arrière du véhicule où le volet est fermé, et l'écran de séparation est en position d'accrochage ;
- la figure 4 est une vue partielle arrière du véhicule où le volet est ouvert, et l'écran de séparation est en position d'accrochage ; et
- la figure 5 est une vue partielle arrière du véhicule où le volet est fermé et l'écran de séparation est en position de séparation.

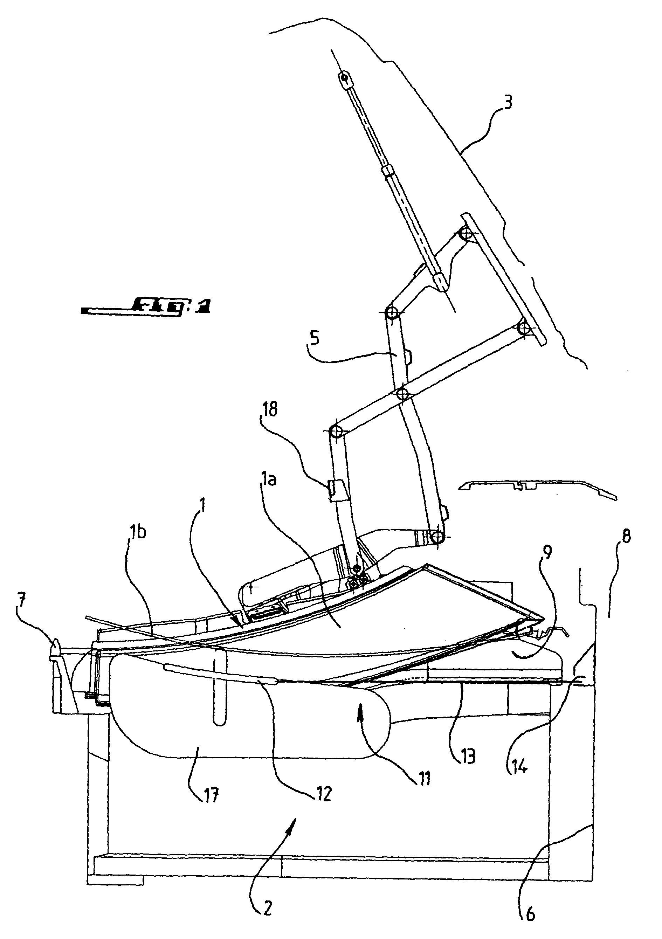

Comme l'illustre la figure 1, l'invention concerne les véhicules de type cabriolet à toit ouvrant rigide 1 pouvant occuper une position déployée ou une position repliée en partie supérieure du coffre arrière 2 du véhicule. Le coffre 2 peut être fermé par un volet 3 monté pivotant par rapport au coffre 2 par un mécanisme d'articulation à biellettes latérales 5 connu en soi.

Ce coffre 2 comprend également une partie basse pour le rangement des bagages située en-dessous du toit ouvrant replié, et une cloison verticale ou inclinée avant 6 séparant le coffre 2 des deux sièges du véhicule si celui-ci comporte deux places ou des sièges arrière pour un véhicule à quatre places ou plus.

Le toit 1 replié repose sur des butées 7 disposées de chaque côté du coffre 2. Le toit 1 comprend des éléments latéraux 1a qui se replient sur les côtés du coffre 2 et des éléments transversaux 1b qui se replient au centre de la partie supérieure du coffre.

Une communication existe au-dessus de la cloison 6 entre le coffre 2 et la zone arrière 8 des sièges du véhicule.

Un garnissage latéral 9 situé de chaque côté du coffre arrière 2 permet de dissimuler des éléments de structure du véhicule comme on le verra ci-après.

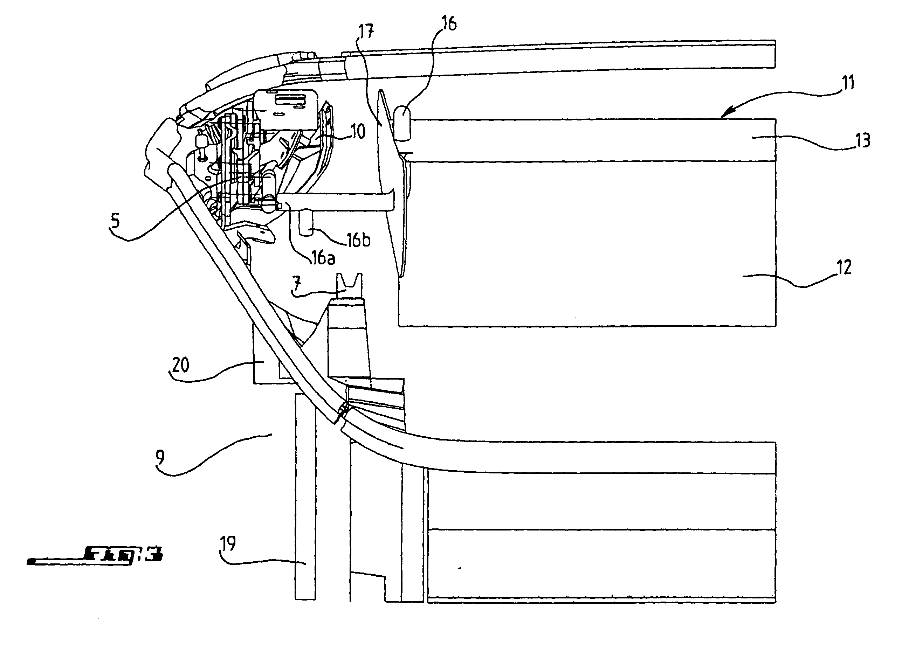

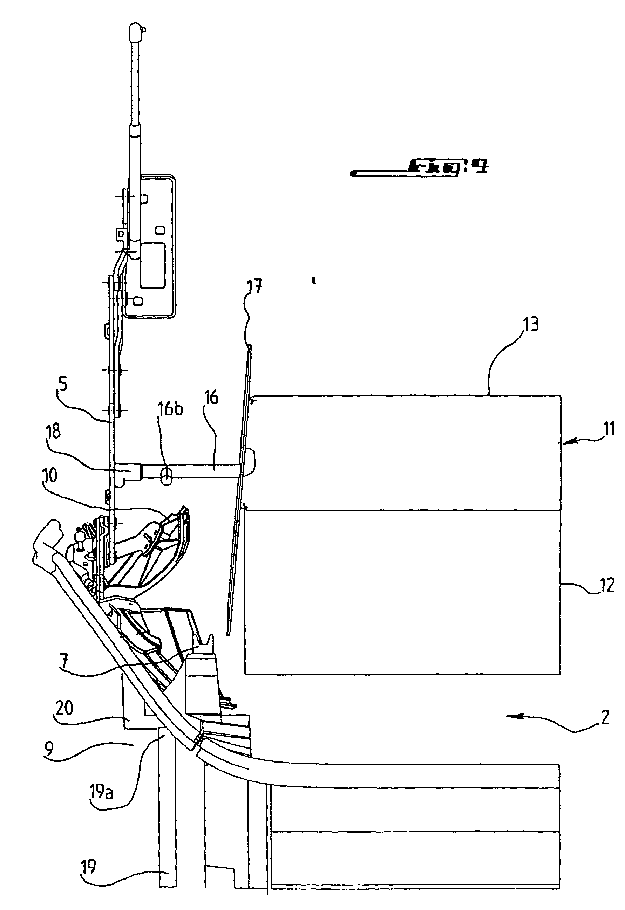

Comme le montrent les figures 3 et 4, des obturateurs de débattement mécanique 10, connus en soi, se trouvent de chaque côté au pied des biellettes 5. Ces obturateurs ne sont pas présents dans le coffre 2 quand le toit 1 est replié puisqu'ils obstruent les espaces laissés libres dans le garnissage latéral 9, mais sont proéminents dans le coffre 2 quand le toit 1 est déployé.

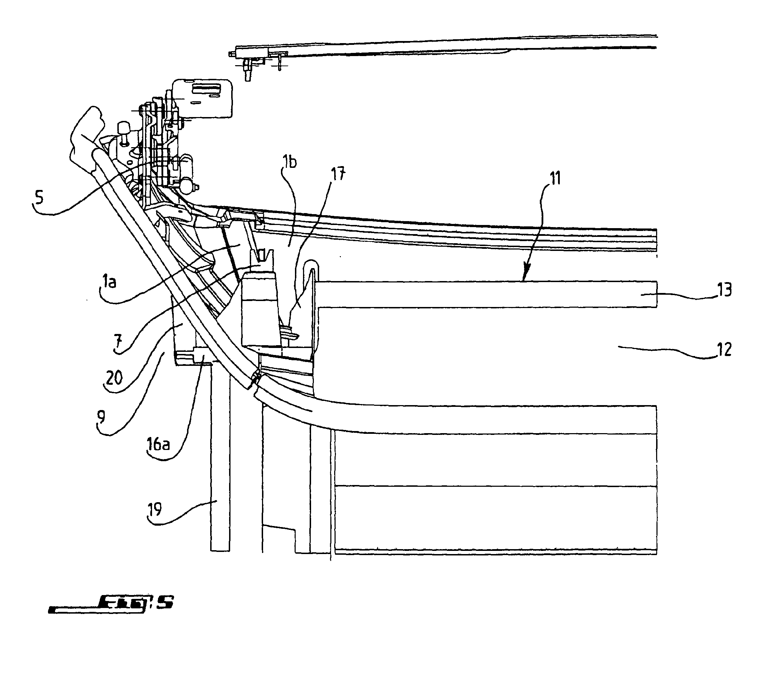

Le coffre 2 comprend également un écran transversal mobile 11 fixé sur la paroi avant 6 et pouvant occuper une position de séparation entre le toit ouvrant 1 et le volume restant (partie basse) du coffre. Cette position est illustrée sur les figures 1 et 5.

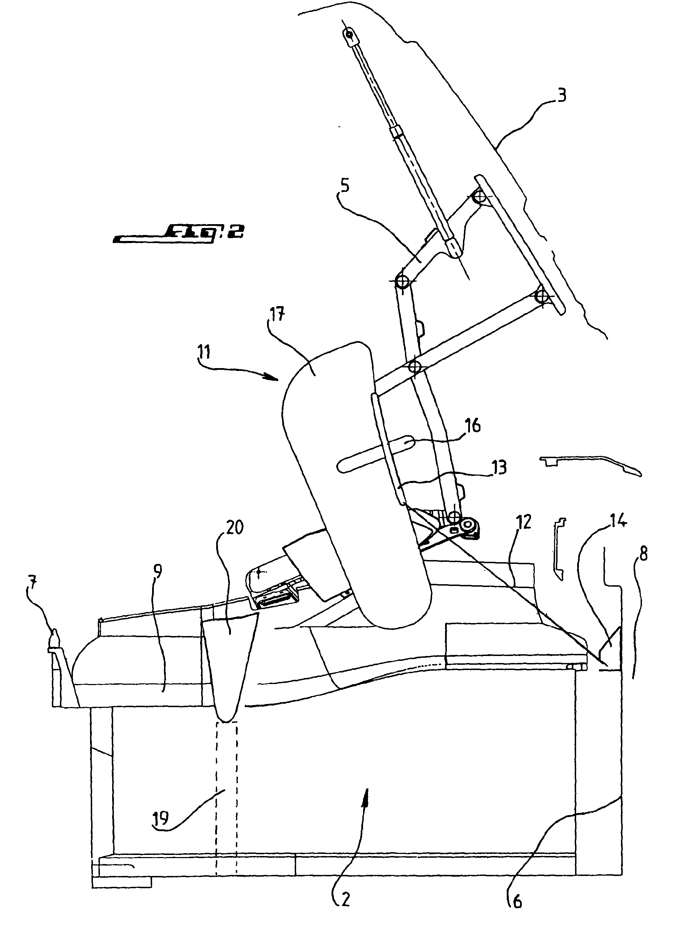

Selon l'invention, l'écran 11 peut également être manuellement accroché bilatéralement aux biellettes 5 du mécanisme d'articulation du volet 3 lorsque le toit 1 est déployé et que le volet 3 est ouvert, ce qui permet d'étendre la zone de rangement des bagages dans le coffre. Cette position est illustrée sur les figures 2 à 4.

On peut voir sur les figures 3 et 4 un mode de réalisation typique de l'écran 11. Celui-ci comprend un panneau avant transversal 12 en matière souple lié à un panneau arrière rigide 13 par l'intermédiaire d'une articulation transversale. Le panneau avant 12 est fixé à la cloison 6 du coffre 2, par l'intermédiaire d'un enrouleur horizontal 14 solidaire de la cloison ou directement à celle-ci par une articulation horizontale.

Les largeurs des panneaux 12 et 13 sont déterminées de façon à ce que, en position de séparation, ils puissent se loger à l'intérieur du coffre 2 mais que le jeu entre eux et les éléments latéraux la du toit 1 soit minimum.

Le panneau rigide 13 peut être constitué d'une plaque pleine ou d'un cadre rigide sur lequel est tendue une toile souple.

L'écran 11 comprend également des barres latérales 16 en L typiquement cylindriques, rigidement liées chacune à un côté du panneau arrière 13.

L'une des branches du L traverse le panneau arrière 13 sensiblement perpendiculairement et fait saillie. Dans un autre mode de réalisation non représenté, cette branche s'arrête au ras du panneau 13. L'autre branche du L est horizontale et fait saillie par rapport au panneau 13.

Des joues latérales 17 sensiblement verticales sont fixées rigidement de chaque côté du panneau arrière 13 de l'écran 11.

Ces joues 17 sont constituées chacune d'un panneau de matériau plein ou d'un cadre rigide sur lequel est tendue une toile souple ou un filet.

Ces joues 17 présentent chacune sensiblement la forme d'un rectangle, lié au niveau du grand côté formant bord supérieur au panneau arrière 13 et perpendiculaire à celui-ci. Les branches horizontales des barres 16 traversent respectivement les joues 17 et leur sont sensiblement perpendiculaires, contribuant ainsi à rigidifier la liaison entre les joues 17 et le panneau arrière 13.

Ainsi, quand le volet 3 est fermé, les joues 17 et les branches des barres horizontales 16 sont situées sous le panneau arrière 13.

Dans la position d'accrochage de l'écran 11, le panneau arrière 13 est fixé de chaque côté à l'une des biellettes 5 du mécanisme d'articulation par l'intermédiaire d'une pièce d'accrochage 18 solidaire de la biellette 5 et dans laquelle est amoviblement fixée l'extrémité libre 16a de la barre 16. De préférence, les extrémités libres 16a présentent une forme aplatie et peuvent s'engager dans des fentes ou des ouvertures de forme correspondante réalisées dans les pièces d'accrochage 18.

Selon une variante de réalisation, chaque pièce d'accrochage 18 peut être constituée par un manchon à section carrée dans lequel peut s'engager l'extrémité libre conjuguée 16a de la barre correspondante 16.

La liaison entre les barres 16 et les supports 18 est donc rigide, empêchant toute rotation du panneau arrière 13 par rapport aux biellettes 5.

L'écran 11 dans sa position d'accrochage est donc solidaire du mécanisme d'articulation du volet 3 et son panneau arrière 3 se lève ou s'abaisse quand l'utilisateur ouvre ou ferme le volet 3, entraînant la partie avant souple 10, et dégageant un accès au coffre 2 très large pour les utilisateurs quand le volet 3 est ouvert.

Comme le montre la figure 3, quand l'écran 11 est dans sa position d'accrochage et que le volet 3 du coffre 2 est fermé, les joues 17 sont interposées entre les obturateurs de débattement 10 et l'intérieur du coffre 2, protégeant les obturateurs 10 des mouvements transversaux des bagages disposés dans le coffre 2.

Comme le montre la figure 5, dans la position de séparation, l'écran 11 repose par l'intermédiaire des barres latérales 16 sur deux tubes 19 sensiblement verticaux situés de chaque côté du coffre 2 noyés dans le garnissage 9 et constituant des éléments de structure du véhicule.

Chaque tube 19 comporte à son extrémité supérieure 19a un orifice cylindrique dans lequel peut s'engager un tenon cylindrique 16b solidaire de la barre latérale 16 correspondante et d'axe perpendiculaire à celle-ci.

Le garnissage 9 comprend des échancrures latérales 20, bien visibles sur la figure 2, sensiblement verticales, assurant le guidage latéral des extrémités 16a des barres 16 vers les tubes 19. Ces tubes 19 comprennent au moins un capteur interdisant le rangement du toit 1 dans le coffre 2 tant que les barres latérales 16 sont accrochées aux biellettes. Ce capteur qui peut être du type contacteur est relié à l'ordinateur de bord du véhicule.

Dans la position de séparation de l'écran 11, les extrémités des barres 16 faisant saillie au-dessus du panneau arrière 13 servent de butée supplémentaire du toit 1 replié dans le coffre 2 (voir la figure 1).

La passage de l'écran 11 de la position d'accrochage à la position de séparation, et inversement, est effectué manuellement. Le volet 3 étant ouvert, l'utilisateur désolidarise les barres latérales 16 des pièces d'accrochage 18 et vient les déposer dans les échancrures 20 sur les tubes 19. Cette manoeuvre est facile car l'utilisateur n'a pas à se pencher loin à l'intérieur du coffre.

On peut voir sur la figure 1 que quand le toit 1 est replié, une parties des éléments 1a du toit 1, qui se trouvent normalement sous l'écran 11 en position de séparation, sont masquées par les joues 17. Par ailleurs, comme le montrent les figures 1 et 5, les joues 17 ferment sur une certaine longueur l'interstice existant de chaque côté du coffre 2 entre les éléments la du toit replié 1 et les parties arrière 13 et avant 12 de l'écran 11. La disposition des joues limite donc le risque que des objets disposés dans le coffre 2 se glissent entre les éléments du toit replié 1 et endommagent les articulations.

Il ressort également de la description précédente que, quelle que soit la position de l'écran 11, la partie avant 12 souple est toujours interposée entre le coffre 2 où sont disposés les bagages et la zone arrière 8 des sièges des passagers, limitant là aussi le risque que des objets se glissent dans cette zone arrière 8 et endommagent ou perturbent le fonctionnement des équipements, comme par exemple les arceaux de sécurité.

Bien entendu, diverses modifications peuvent être apportées sans sortir du cadre de l'invention. Ainsi l'écran peut être constitué de deux panneaux rigides articulés l'un à l'autre.

## Revendications

1. Véhicule décapotable à toit ouvrant rigide (1), pouvant occuper une position déployée ou une position repliée en partie supérieure du coffre arrière (2) du véhicule, lequel coffre (2) peut être fermé par un volet (3) qui est monté pivotant relativement au coffre (2) par un mécanisme d'articulation à biellettes (5) latérales, un écran (11) étant prévu pour occuper une position de séparation entre le toit ouvrant replié (1) et le volume restant du coffre arrière (2) et étant fixé à une cloison avant (6) séparant le coffre (2) des sièges du véhicule, **caractérisé en ce que** l'écran (11) peut occuper une position d'accrochage aux biellettes latérales (5) du mécanisme d'articulation du volet (3) lorsque le toit ouvrant (1) est déployé.

2. Véhicule automobile décapotable à toit ouvrant rigide selon la revendication 1, **caractérisé en ce que** l'écran (11) comprend deux barres latérales (16) qui lui sont solidaires et dont au moins une partie s'étend transversalement à l'axe longitudinal du véhicule, les barres (16) pouvant être manuellement disposées respectivement sur deux supports latéraux (19) correspondant à la position de séparation de l'écran (11), ou manuellement accrochées respectivement aux biellettes latérales (5) du mécanisme d'articulation du volet (3).

3. Véhicule automobile décapotable à toit ouvrant rigide selon l'une quelconque des revendications 1 ou 2, **caractérisé en ce que** une joue (17) est disposée de chaque côté de l'écran (11), sensiblement perpendiculairement, ces joues (17) étant solidaires de l'écran (11), chaque joue (17) assurant la protection en position d'accrochage de l'écran (11) aux biellettes latérales (5) d'éléments relativement fragiles situés en partie supérieure des parois latérales du coffre (2), et, en position de séparation de l'écran (11), de protection des parties latérales (1a) du toit (1) replié comportant des articulations, pour empêcher des objets situés dans le coffre d'atteindre notamment ces articulations.

4. Véhicule automobile décapotable à toit ouvrant rigide selon la revendication 2, **caractérisé en ce que** chaque barre latérale (16) présente une extrémité (16a) fixée de façon amovible à l'une correspondante des biellettes latérales (5) par une pièce d'accrochage (18) solidaire de la biellette (5), l'extrémité libre (16a) de la barre (16) venant s'engager dans une ouverture de forme correspondante de la pièce d'accrochage (18).

5. Véhicule automobile décapotable à toit ouvrant rigide selon l'une quelconque des revendications 2 ou 4, **caractérisé en ce que** chaque moyen de support (19)d'une barre latérale (16) en position de séparation de l'écran (11)comprend un tube vertical logé dans un garnissage latéral (9) du coffre (2), et dans l'extrémité supérieure (19a) duquel peut s'engager un tenon cylindrique (16b) solidaire de la barre latérale (16) correspondante et d'axe perpendiculaire à celle-ci.

6. Véhicule automobile décapotable à toit ouvrant rigide selon la revendication 5, **caractérisé en ce que** chaque garnissage latéral (9) comprend une échancrure latérale (20) sensiblement verticale de guidage de l'extrémité libre (16a) de la barre latérale (16) correspondante vers sa position de support du tube (19)

7. Véhicule automobile décapotable à toit ouvrant rigide selon l'une quelconque des revendications précédentes, **caractérisé en ce que** l'écran (11) comprend un panneau avant souple (12) fixé à la cloison avant (6), et un panneau arrière rigide (13) articulé au panneau avant (12), la panneau arrière (13) pouvant être manuellement accroché aux biellettes (5) latérales du mécanisme d'articulation du volet (3)

8. Véhicule automobile décapotable à toit ouvrant rigide selon la revendication 7 lorsque considéré en combinaison avec au moins la revendication 3, **caractérisé en ce que** chaque joue latérale (17) est solidaire du côté correspondant du panneau arrière (13).

9. Véhicule automobile décapotable à toit ouvrant rigide selon l'une quelconque des revendications 2, 4, 5, 6 ou 8, **caractérisé en ce qu'**on prévoit au moins un capteur de détection de position d'une barre latérale (16) sur son moyen de support (19) correspondant et pouvant fournir un signal empêchant le rangement du toit (1) dans le coffre (2), tant que les barres latérales (16) sont accrochées aux biellettes latérales (5) du mécanisme d'articulation du volet (3).

## Patentansprüche

1. Kraftfahrzeug mit zu öffnendem starren Klappverdeck (1), das eine ausgefahrene Stellung bzw. eine zusammengefaltete Stellung im oberen Bereich des hinten liegenden Kofferraums (2) des Fahrzeugs einnehmen kann, wobei der Kofferraum (2) mit einer Klappe (3) verschließbar ist, die relativ zum Kofferraum (2) über ein Gelenkgetriebe mit seitlichen Schwenkarmen (5) verschwenkbar ist, wobei eine Abdeckung (11) dazu vorgesehen ist, eine Trennstellung zwischen dem zusammengefalteten Klappverdeck (1) und dem restlichen Raum des hinten liegenden Kofferraums (2) einzunehmen, und an einer vorderen Wand (6) befestigt ist, die den Kofferraum (2) von den Fahrzeugsitzen trennt, **dadurch gekennzeichnet, dass** die Abdeckung (11) eine Verhakungsstellung mit den seitlichen Schwenkarmen (5) des Gelenkgetriebes der Klappe (3) einnehmen kann, wenn das Klappverdeck (1) ausgefahren ist.

2. Kraftfahrzeug mit zu öffnendem starren Klappverdeck nach Anspruch 1, **dadurch gekennzeichnet, dass** die Abdeckung (11) zwei seitliche Stangen (16) enthält, die fest mit dieser verbunden sind und von denen zumindest ein Teil sich quer zur Längsachse des Fahrzeugs erstreckt, wobei die Stangen (16) an zwei jeweiligen Seitenstützen (19) manuell angeordnet werden können, die der Trennstellung der Abdeckung (11) entsprechen, oder aber an zwei jeweiligen seitlichen Schwenkarmen (5) des Gelenkgetriebes der Klappe (3) manuell verhakt werden können.

3. Kraftfahrzeug mit zu öffnendem starren Klappverdeck nach einem der Ansprüche 1 oder 2, **dadurch gekennzeichnet, dass** auf jeder Seite der Abdeckung (11) ein Seitenteil (17) im wesentlichen senkrecht angeordnet ist, wobei diese Seitenteile (17) fest mit der Abdeckung (11) verbunden sind, wobei jedes Seitenteil (17) in Verhakungsstellung der Abdeckung (11) an den seitlichen Schwenkarmen (5) einen Schutz für relativ empfindliche Teile bietet, die sich im oberen Bereich der Seitenwände des Kofferraums (2) befinden, und in Trennstellung der Abdeckung (11) einen Schutz für die Seitenbereiche (1a) des zusammengefalteten Verdecks (1) mit den Gelenken gewährleistet, um im Kofferraum vorhandene Gegenstände daran zu hindern, insbesondere diese Gelenke zu erreichen.

4. Kraftfahrzeug mit zu öffnendem starren Klappverdeck nach Anspruch 2, **dadurch gekennzeichnet, dass** jede seitliche Stange (16) ein Ende (16a) aufweist, das abnehmbar an dem einen entsprechenden seitlichen Schwenkarm (5) über ein fest mit dem Schwenkarm (5) verbundenes Verhakungsteil (18) befestigt ist, wobei das freie Ende (16a) der Stange (16) in eine Öffnung entsprechender Form des Verhakungsteils (18) eingreift.

5. Kraftfahrzeug mit zu öffnendem starren Klappverdeck nach einem der Ansprüche 2 oder 4, **dadurch gekennzeichnet, dass** jedes Abstützmittel (19) einer seitlichen Stange (16) in Trennstellung der Abdeckung (11) ein senkrechtes Rohr enthält, das in einer Seitenverkleidung (9) des Kofferraums (2) aufgenommen ist und in dessen oberes Ende (19a) ein Zylinderzapfen (16b) eingreifen kann, der fest mit der entsprechenden seitlichen Stange (16) verbunden ist und achssenkrecht zu dieser verläuft.

6. Kraftfahrzeug mit zu öffnendem starren Klappverdeck nach Anspruch 5, **dadurch gekennzeichnet, dass** jede Seitenverkleidung (9) eine im wesentlichen senkrechte seitliche Aussparung (20) zum Führen des freien Endes (16a) der entsprechenden seitlichen Stange (16) in ihre Stellung zum Abstützen des Rohrs (19) enthält.

7. Kraftfahrzeug mit zu öffnendem starren Klappverdeck nach einem der vorangehenden Ansprüche, **dadurch gekennzeichnet, dass** die Abdeckung (11) eine vordere nachgiebige Platte (12) enthält, die an der vorderen Wand (6) befestigt ist, sowie eine hintere starre Platte (13), die an der vorderen Platte (12) angelenkt ist, wobei die hintere Platte (13) manuell mit den seitlichen Schwenkarmen (5) des Gelenkgetriebes der Klappe (3) verhakt werden kann.

8. Kraftfahrzeug mit zu öffnendem starren Klappverdeck nach Anspruch 7 bei Anbetracht in Kombination mit zumindest Anspruch 3, **dadurch gekennzeichnet, dass** jedes Seitenteil (17) fest mit der entsprechenden Seite der hinteren Platte (13).verbunden ist.

9. Kraftfahrzeug mit zu öffnendem starren Klappverdeck nach einem der Ansprüche 2, 4, 5, 6 oder 8, **dadurch gekennzeichnet, dass** zumindest ein Sensor zum Erfassen der Stellung einer seitlichen Stange (16) an ihrem entsprechenden Abstützmittel (19) vorgesehen ist, der ein Signal abgeben kann, welches das Verstauen des Verdecks (1) im Kofferraum (2) verhindert, während die seitlichen Stangen (16) mit den seitlichen Schwenkarmen (5) des Gelenkgetriebes der Klappe (3) verhakt sind.

## Claims

1. Convertible vehicle with open rigid roof (1), which may occupy an opened out or folded up position on top of the rear boot (2) of the vehicle, which rear boot (2) may be closed by a shutter (3) mounted to pivot in relation to the boot (2) by a hinge mechanism with side links (5), a screen (11) being provided to occupy a separating position between the folded up open roof (1) and the remaining volume of the rear boot (2), which is fixed to a front partition (6) separating the boot (2) from the seats of the vehicle, **characterised in that** the screen (11) may occupy a position for hooking to the side links (5) of the hinge mechanism of the shutter (3) when the open roof (1) is opened out.

2. Convertible motor vehicle with open rigid roof according to claim 1, **characterised in that** the screen (11) has two side bars (16), which are integral with it, at least one part of which extends transversely to the longitudinal axis of the vehicle, the bars (16) being able to be arranged manually on two side supports (19) respectively, which correspond to the separating position of the screen (11), or hooked manually to the side links (5) respectively of the hinge mechanism of the shutter (3).

3. Convertible motor vehicle with open rigid roof according to any of claims 1 or 2, **characterised in that** a plate (17) is arranged on each side of the screen (11), more or less at right angles, these plates (17) being integral with the screen (11), each plate (17) providing protection for relatively fragile elements situated on top of the side walls of the boot (2) in the position where the screen (11) is hooked to the side links (5) and protection for the side parts (1 a) of the folded up roof (1) with the hinges in the separating position of the screen (11), to prevent items situated in the boot from reaching these hinges in particular.

4. Convertible motor vehicle with open rigid roof according to claim 2, **characterised in that** each side bar (16) has an end (16a) which is fixed in a detachable way to the corresponding side bar (5) by a hooking part (18), which is integral with the link (5), the free end (16a) of the bar (16) engaging in an opening with a shape corresponding to the hooking part (18).

5. Convertible motor vehicle with open rigid roof according to any of claims 2 or 4, **characterised in that** in the separating position of the screen (11) each means of support (19) of a side bar (16) has a vertical tube housed in a side lining (9) of the boot (2), in the top end (19a) of which a cylindrical peg (16b) may engage, which is integral with the corresponding side bar (16) and the shaft at right angles to it.

6. Convertible motor vehicle with open rigid roof according to claim 5, **characterised in that** each side lining (9) has a more or less vertical side indentation (20) to guide the free end (16a) of the corresponding side bar (16) towards its position for supporting the tube (19)

7. Convertible motor vehicle with open rigid roof according to any of the previous claims, **characterised in that** the screen (11) has a front flexible panel (12) fixed to the front partition (6) and a rigid rear panel (13) hinged to the front panel (12), the rear panel (13) being able to be hooked manually to the side links (5) of the hinge mechanism of the shutter (3).

8. Convertible motor vehicle with open rigid roof according to claim 7 when considered in combination with at least claim 3, **characterised in that** each side plate (17) is integral with the corresponding side of the rear panel (13).

9. Convertible motor vehicle with rigid open roof according to any of claims 2, 4, 5, 6 or 8, **characterised in that** at least one sensor is provided to detect the position of a side bar (16) on its corresponding means of support (19), which may supply a signal preventing the roof from being put away (1) in the boot (2) when the side bars (16) are hooked to the side links (5) of the hinge mechanism of the shutter (3).
